# EUROPÄISCHE PATENTANMELDUNG

(11) **EP 0 740 950 A2**
(43) Veröffentlichungstag der Anmeldung: **06.11.1996**
(21) Anmeldenummer: 96890075.3
(22) Anmeldetag: 24.04.1996
(51) Int. Cl.: B01D 21/02, B01D 21/34

(54) **Sedimentationsbecken, speziell für Kreislaufsysteme**

(30) Priorität: 02.05.1995 AT 748/95
(71) Anmelder: ALOIS SCHEUCH GESELLSCHAFT m.b.H., A-4910 Ried i.I. (AT)
(72) Erfinder: Lisberger, Manfred, Dipl.-Ing., 4752 Riedau (AT)
(74) Vertreter: Köhler-Pavlik, Johann, Dipl.-Ing.

(57) **Zusammenfassung**

Die Erfindung betrifft ein Sedimentationsbecken, speziell für Kreislaufsysteme, in welchem partikelförmige Verunreinigungen der Kreislaufflüssigkeit abgeschieden werden und aus dem die gereinigte Flüssigkeit wieder abgezogen wird, bestehend aus einem sich nach unten konisch verjüngenden Becken und einer im Inneren des Beckens angeordneten, oberhalb des Beckenbodens endenden Leiteinrichtung. Um eine optimale Abscheidung der in der Flüssigkeit enthaltenen Partikel zu gestatten und deren Mitreißen beim Abziehen der Flüssigkeit aus dem Becken in den Kreislauf weitestgehend zu verhindern, ist das Becken 11 nach oben offen. Vorzugsweise ist die Leiteinrichtung 19 trichterförmig ausgebildet.

## Beschreibung

Die Erfindung betrifft ein Sedimentationsbecken, speziell für Kreislaufsysteme nach dem Oberbegriff des Anspruchs 1.

In vielen Bereichen der Industrie werden Sedimentationsbecken zur Abscheidung von Verunreinigungen aus Flüssigkeiten eingesetzt. Beispielsweise ist in Naßelektrofiltern ein Wasserkreislauf zur periodischen Abreinigung der Niederschlagsflächen vorgesehen, wobei aus dem Waschwasser vor dessen weiterer Verwendung die aus dem Filter ausgespülten Verunreinigungen entfernt werden müssen. Dies kann für partikelförmige Substanzen, die nicht in Lösung gehen, durch Sedimentation in einem dafür vorgesehenen Becken stattfinden.

Die Aufgabe der vorliegenden Erfindung besteht in der Entwicklung eines Sedimentationsbeckens für Wasserkreislaufsysteme, welches eine optimale Abscheidung der in der Flüssigkeit enthaltenen Partikel gestattet und in weiterer Folge deren Mitreißen beim Abziehen der Flüssigkeit aus dem Becken in den Kreislauf weitestgehend verhindert unter Vermeidung der oben erwähnten Nachteile.

Diese Aufgabe wird erfindungsgemäß durch das im kennzeichnenden Teil des Anspruchs 1 angegebene Merkmal gelöst. Das oben offene Sedimentationsbecken kann direkt in eine Reinigungsanlage eingebracht werden, wo die zu reinigende Flüssigkeit über diese Öffnung in das Sedimentationsbecken gelangt. Dadurch entfallen allfällige Sammeltrichter und Zuleitungen zum Sedimentationsbecken. Die Sedimentation von Partikeln wird durch die gleichmäßige Zuführung der verunreinigten Flüssigkeit von oben über eine die gesamte Deckfläche des Beckens einnehmenden Öffnung bedeutend verbessert. Zwischen der Leiteinrichtung und der Beckenwand entsteht ein Bereich mit sauberer Flüssigkeit, welche von dort zur Rückführung in den Kreislauf entnommen werden kann, ohne daß sich gerade in der Sedimentationsphase befindliche Partikel beim Abziehen mitgerissen werden.

Durch eine trichterförmige Ausführung der Leiteinrichtung wird der oben erwähnte Effekt noch weiter verbessert und eine bedeutend bessere, fast vollständige Trennung der verschmutzten, eingeleiteten Flüssigkeit innerhalb der Leiteinrichtung von der durch Sedimentation gereinigten Flüssigkeit außerhalb der Leiteinrichtung erzielt.

Gemäß einem weiteren Erfindungsmerkmal besteht die Leiteinrichtung aus einem oberen, sich nach unten konisch verjüngenden Abschnitt und allenfalls aus einem sich daran anschließenden unteren Abschnitt mit im wesentlichen konstanten Querschnitt bzw. geringerem Öffnungswinkel als jenem des oberen Abschnittes, wobei der Öffnungswinkel des oberen Abschnittes der Leiteinrichtung größer ist als jener des Beckens. Durch eine derartige Ausführungsform wird die Sedimentation noch weiter verbessert und der Reinwasserbereich des Beckens vergrößert, wodurch mehr Einbauraum für Abzugseinrichtungen od. dgl. aus dem Becken geschaffen wird.

Alternativ dazu kann unter Realisierung der selben Vorteile die Leiteinrichtung aus einem im wesentlichen horizontalen oberen Abschnitt und allenfalls einem sich daran anschließenden unteren Abschnitt mit im wesentlichen konstanten Querschnitt bzw. geringerem Öffnungswinkel als jenem des oberen Abschnittes bestehen.

Um eine vollständige Erfassung aller in das Becken eingebrachten, abzuscheidenden Verunreinigungen zu gewährleisten, sind alle Einbringöffnungen für die Flüssigkeit aus dem Kreislauf oberhalb und/oder innerhalb des Bereiches der Leiteinrichtung vorgesehen.

Vorteilhafterweise ist zumindest eine Einbringöffnung in den oberen Abschnitt der Leiteinrichtung über ein Rohrstück mit dem außerhalb des Beckens befindlichen Kreislaufsystem verbunden, sodaß die verunreinigte Flüssigkeit ohne Gefahr der Verschmutzung der bereits durch die Sedimentation gereinigten Flüssigkeit im Becken eingeleitet werden kann.

Gemäß einem weiteren Erfindungsmerkmal mündet zumindest eine die Höhe der Flüssigkeitsoberfläche definierende Einbringöffnung in den oberen Abschnitt der Leiteinrichtung unterhalb des Niveaus der Überlauföffnung und liegt die unterste Abzugsöffnung für die Flüssigkeit oberhalb des unteren Endes des unteren Abschnittes der Leiteinrichtung. Dadurch wird eine im Normalbetrieb dauernd unterhalb des Flüssigkeitsspiegels stattfindende Flüssigkeitseinbringung mit geringstmöglicher Störung der Sedimentation durch die Flüssigkeitseinbringung, beispielsweise durch auf den Flüssigkeitsspiegel hinunterstürzende Flüssigkeit, gewährleistet.

Wenn zumindest eine Abzugsleitung für die Flüssigkeit aus dem Becken im Raum zwischen der Wand des Beckens und der Leiteinrichtung, vorzugsweise in Höhe deren unteren Abschnittes in das Becken mündet, kann dadurch die Rückleitung von weitestgehend reiner Flüssigkeit ohne Gefahr des Mitreißens gerade absinkender Partikel sichergestellt werden. Da sich durch die Abwärtsbewegung der Flüssigkeit innerhalb der Leiteinrichtung, allenfalls noch durch diese bzw. die Orientierung der Einbringöffnungen für die Flüssigkeit in das Becken unterstützt, eine zirkuläre Strömung im Becken ausbilden kann, ist es vorteilhaft, wenn gemäß einem weiteren Erfindungsmerkmal die Achse der oder jeder Abzugsöffnung aus dem Becken im wesentlichen tangential zur Wand des Beckens orientiert ist, wobei vorzugsweise die Ebene der Abzugsöffnung im wesentlichen senkrecht und radial zur vertikalen Achse des Beckens orientiert und die Abzugsöffnung im selben Umlaufsinn wie die oder jede Einleitung mündet. Die von der zirkulären Strömung außerhalb der Leiteinrichtung allenfalls noch mittransportierten Partikel werden so an den Abzugsöffnungen vorbeigetragen und werden nur zu einem geringen Anteil von der entgegen der Strömungsrichtung abgezogenen Flüssigkeit mitgenommen.

Der im vorigen Absatz genannte Vorteil kann noch weiter ausgebaut werden, wenn gemäß einem weiteren Merkmal der Erfindung die oder jede Abzugsleitung einen in das Becken hineinragenden Stutzen mit einer Abzugsöffnung aufweist, wodurch verhindert wird, daß Flüssigkeit direkt von der Beckenwand angesaugt wird, auf der sich herabsinkende Partikel abgelagert haben. Dieser Stutzen wird vorteilhafterweise in möglichst großem Abstand zur Beckenwand angeordnet.

Eine weitere Verbesserung des oben beschriebenen Effekts ist möglich, wenn zumindest eine Flüssigkeitszuleitung mit einem tangential zur Wand des Beckens orientierten Abschnitt vorgesehen ist. Mit dieser Konstruktion kann eine zur Beckenwand tangentiale Strömung erzeugt werden, welche die Ablagerung von Partikeln im Bereich der Beckenwand verhindert und gleichzeitig diese Partikel von der oder jeder Abzugsöffnung wegtreibt.

In der nachfolgenden Beschreibung wird die Erfindung anhand einer bevorzugten Ausführung unter Bezugnahme auf die beigefügten Zeichnungen näher beschrieben.

Es zeigen
- Fig. 1: eine Schema einer Gesamtanlage zur Rohgasreinigung einschließlich aller Nebenanlagen und -aggregate und dem erfindungsgemäßen Sedimentationsbecken,
- Fig. 2: einen Längsschnitt des erfindungsgemäßen Sedimentationsbeckens,
- Fig. 3a und 3b: jeweils einen Querschnitt längs der Schnittlinie III-III aus Fig. 2 und
- Fig. 4a bis 4e: schematisch verschiedene Ausführungsformen der Leiteinrichtung des Sedimentationsbeckens im Längsschnitt.

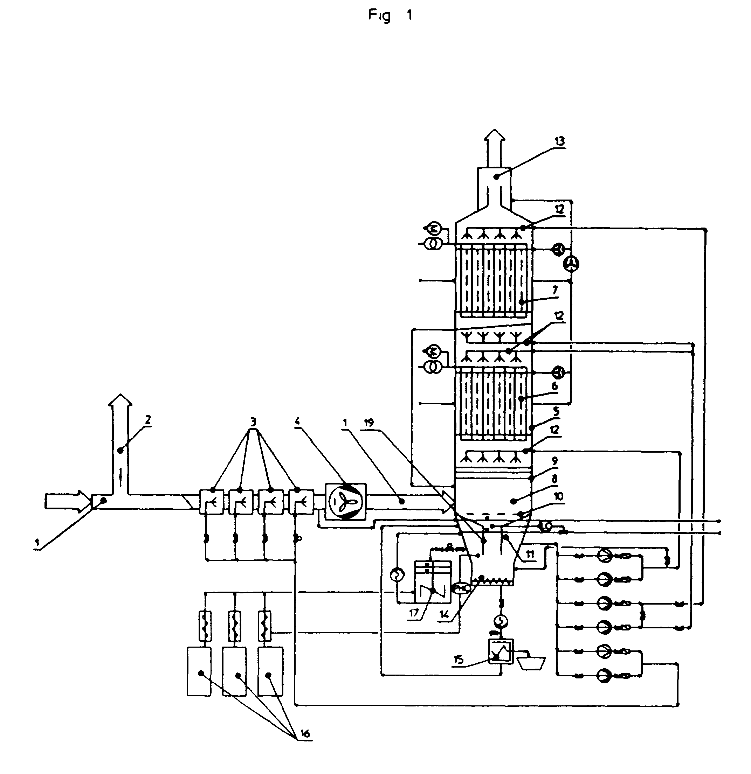

Wie in Fig. 1 dargestellt, wird das staubbeladene Abgas über eine Zuleitung 1 mit einem Notkamin 2 allenfalls nach Passieren zumindest einer Quench-Stufe 3 mit Hilfe eines Ventilators 4 in eine Abscheideanlage 5 befördert. Die Abscheideanlage 5 hat die Form eines senkrechten Turmes, in welchem übereinander zwei Elektrofilterstufen 6, 7 angeordnet sind. Unterhalb des unteren Elektrofilters 6 befindet sich eine Vergleichmäßigungskammer 8, deren obere Begrenzung durch ein Gasverteilerblech 9 gebildet ist. Die untere Begrenzung der Vergleichmäßigungskammer 8 wird durch den Flüssigkeitsspiegel 10 des Wassers im Sedimentationsbecken 11 gebildet. Zur Abreinigung der Bauteile im Inneren der Abscheideanlage 5, speziell zur Abreinigung der Elektrofilter 6, 7 sind Leitungen 12 mit vorzugsweise auf die Elektrofilter 6, 7 bzw. das Gasverteilerblech 9 gerichteten Einspritzdüsen vorgesehen. Ober dem zweiten, oberen Elektrofilter 7 wird der Reingasstrom über eine, den Kamin 13 bildende Öffnung ins Freie geleitet. Bei der Abreinigung der Elektrofilter 6, 7 und des Gasverteilerbleches 9 in das Waschwasser gelangende Substanzen setzen sich im Sedimentationsbecken 11 auf dessen Boden ab und werden von dort mittels beispielsweise einer Schnecke 14 oder einer Schlammpumpe ausgetragen und in einer geeigneten Einrichtung 15, wie z.B. einem Dekanter, entwässert und als Schlamm entsorgt. Das Wasser wird vorteilhafterweise wieder dem Becken 11 rückgeführt. Allfällige Zusatzstoffe werden in trockener Form in Vorratsbehältem 16 gelagert und vor Einbringung in das Wasser des Wasserkreislaufes im Becken 11 der Abscheideanlage 5 in einem Rührbehälter 17 mit Wasser zu einem Schlamm vermischt und in dieser Form dem Wasser im Becken 11 zugemischt.

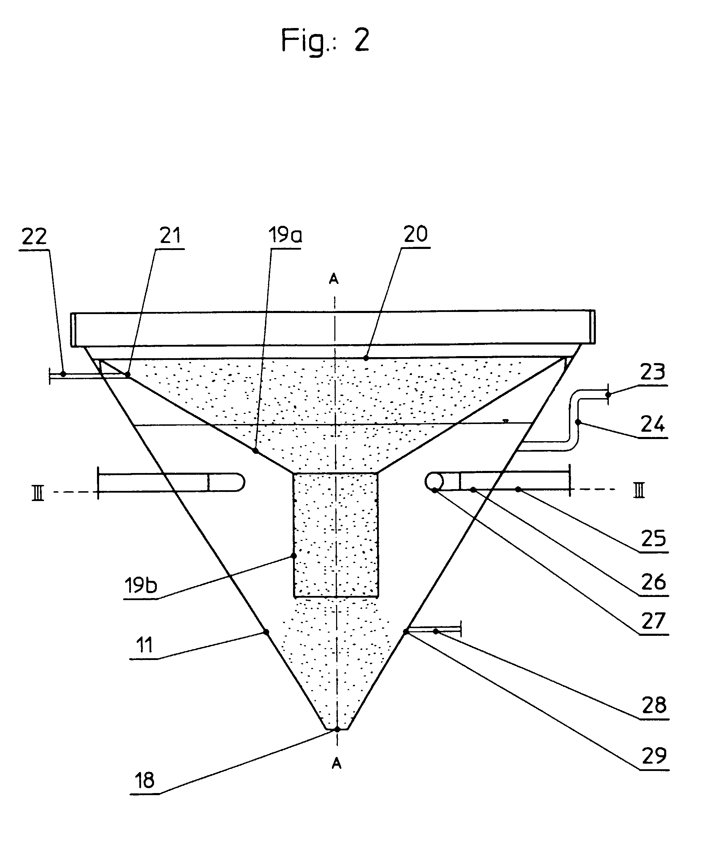

In Fig. 2 ist in vergrößertem Maßstab ein Längsschnitt einer bevorzugten Ausführung des erfindungsgemäßen Sedimentationsbeckens 11 dargestellt. Das Becken 11 verjüngt sich konisch nach unten zum Boden 18 hin in Form eines umgekehrten Kegelstumpfes. Am Boden 18 oder unterhalb desselben sind Einrichtungen 14 zur Ausbringung des abgesetzten Schlamms vorgesehen. Innerhalb des Beckens 11 ist, vorzugsweise direkt an dessen oberem Rand beginnend und die gesamte darunterliegende Fläche des Beckens 11 abdeckend eine Leiteinrichtung 19 für die eingebrachte Flüssigkeit montiert, die aus zwei aneinander anschließenden Abschnitten 19a und 19b besteht. Der obere Abschnitt 19a der Leiteinrichtung 19 verjüngt sich vorzugsweise ebenso wie das Becken 11 konisch nach unten hin, weist aber gegenüber letzterem einen größeren Öffnungswinkel auf. Der untere Abschnitt 19b der Leiteinrichtung 19 weist im wesentlichen konstanten Querschnitt auf und endet oberhalb des Bodens 18 des Beckens 11. Vorzugsweise endet der untere Abschnitt 19b der Leiteinrichtung 19 im Falle einer Austragsöffnung im Becken 11 für den Schlamm im wesentlichen oberhalb dieser Öffnung. Zwischen der Außenseite der Leiteinrichtung 19 und der Innenseite der Wand des Beckens 11 wird ein Bereich gebildet, der bei Normalbetrieb der Anlage auch mit Flüssigkeit gefüllt ist. Zur Niveauregelung der Flüssigkeit im Becken dient eine in Höhe des unteren Abschnittes 19b der Leiteinrichtung 19 mündende Überlaufleitung 24 und deren das normale Flüssigkeitsniveau nach oben hin bestimmende Überlauföffnung 23. Das unterste Flüssigkeitsniveau bei Normalbetrieb wird durch die unterste Abzugsöffnung 27 für Flüssigkeit aus dem Becken 11 definiert, die oberhalb des unteren Endes der Leiteinrichtung 19 bzw. oberhalb von dessen unterem Abschnitt 19b in den Beckenbereich zwischen Leiteinrichtung 19 und Beckenwand mündet. Die Abzugsöffnung 27 steht über die Leitung 25 mit dem Flüssigkeitskreislauf der Abscheideanlage in Verbindung. Die mit den abzuscheidenden Partikeln verunreinigte Flüssigkeit aus dem Kreislauf wird entweder direkt von oben über eine im wesentlichen die gesamte Deckfläche einnehmende Öffnung 20 und/oder über eine Leitung 22 durch das Becken 11 zur Einbringöffnung 21 ins Innere der Leiteinrichtung gebracht. Die Einbringöffnung 21 liegt dabei in einer Höhe oberhalb jener der Überlauföffnung 23. Der Flüssigkeitsspiegel liegt in einer Höhe zwischen der Überlauföffnung 23 und der untersten Abzugsöffnung 27.

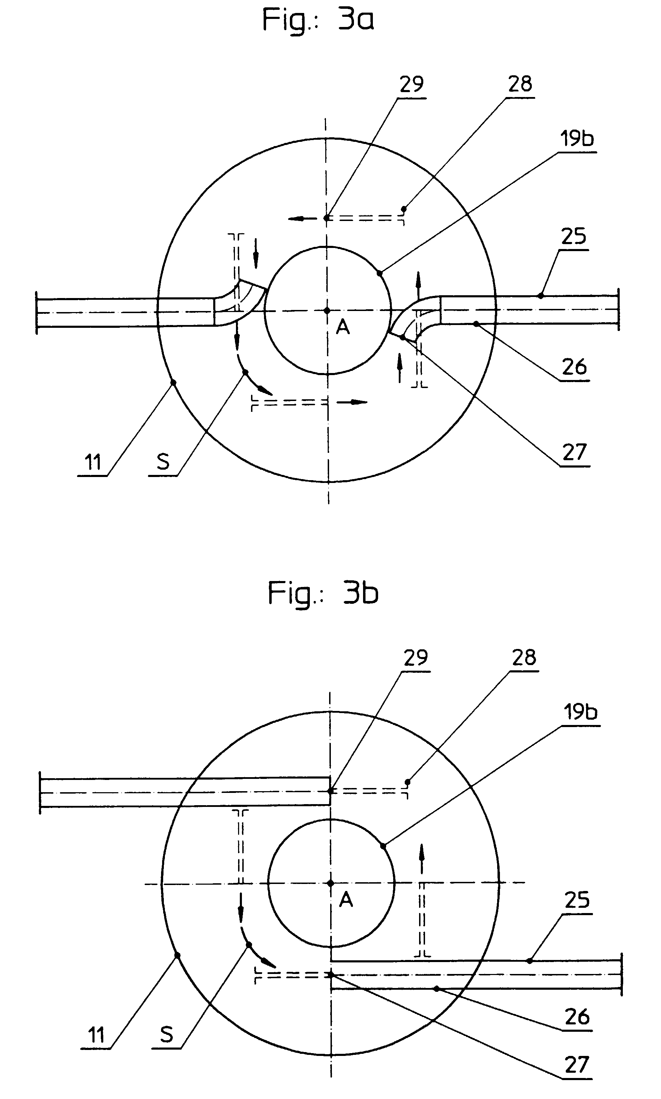

Wie in Fig. 3a und Fig. 3b durch strichlierte Darstellung erläutert ist, wird durch eine Ringleitung 28 mit vier tangential zur Wand des Beckens 11 ausgerichteten Einleitungen 29 eine zirkuläre Strömung im Becken 11 entlang von dessen Wand in Richtung des Pfeiles S erzeugt. Die oder jede Abzugsöffnung 27 ist am vorderen Ende eines ein Stück über die Wand des Beckens 11 hinausragenden Stutzens 26 vorgesehen und im selben Sinn wie die durch die Einleitungen 29 hervorgerufene Flüssigkeitsströmung orientiert, wobei der Eintritt der Flüssigkeit in die Abzugsöffnungen 27 im wesentlichen horizontal und tangential zur Wand des Beckens 11 erfolgt. Dabei kann die Achse der Stutzen 26 wie in Fig. 3a radial zur Achse A des Beckens 11 ausgerichtet und ein kurzes gekrümmtes Endstück mit der Abzugsöffnung 27 vorgesehen sein, damit die im wesentlichen tangentiale Orientierung dieser Öffnung ermöglicht ist. Andererseits können die Stutzen 26 wie in der Ausführungsform der Fig. 3b auch im wesentlichen völlig gerade ausgeführt aber selbst bereits tangential zur Achse A des Beckens 11 vorgesehen sein. Die Flüssigkeitsströmung im Sinn des Pfeiles S verhindert somit gleichzeitig die Ablagerung von Schlamm auf der Wand des Beckens 11 und trägt Verunreinigungen von den Abzugsöffnung 27 weg. Damit ist die Gefahr von Betriebsausfällen durch Verstopfungen od. dgl. deutlich vermindert. Durch die Leiteinrichtung 19 innerhalb des Beckens und die Anordnung aller Einbringöffnungen 20, 21 für die Flüssigkeit ober- oder innerhalb dieser Leiteinrichtung 19 und auf oder unter die Flüssigkeitsoberfläche sowie die Anordnung aller Abzugsöffnungen 27 zwischen der Außenseite der Leiteinrichtung 19 und Wand des Beckens 11 wird eine möglichst ungestörte Sedimentation zugleich mit der geringstmöglichen Gefahr des Mitreißens von sich gerade absetzenden oder gerade eingebrachten Partikeln gewährleistet. Auch allfällige Einbringöffnungen für Zusatzstoffe in das Kreislaufwasser können vorteilhafterweise oberhalb der Leiteinrichtung 19 vorgesehen sein, sodaß die Zusatzstoffe ohne Störung der Sedimentation zugegeben werden können. Durch eine Öffnung am Boden 18 des Beckens 11 werden die aussedimentierten Feststoffe allenfalls mit Hilfe einer Schnecke oder einer Schlammpumpe od. dgl. ausgetragen.

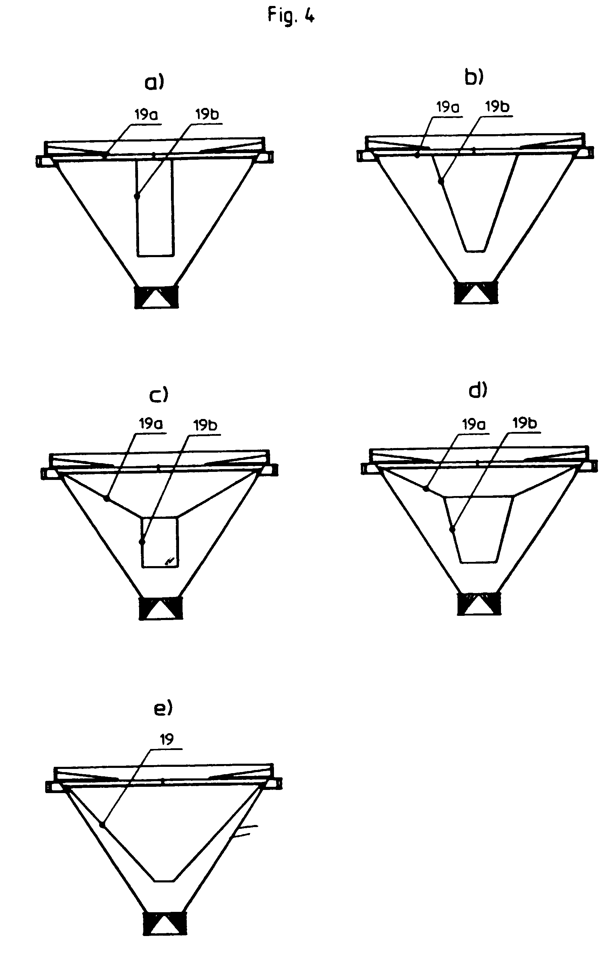

In den Fig. 4a bis 4e sind verschiedene Ausführungsvarianten der Leiteinrichtung 19 des Sedimentationsbeckens dargestellt. In Fig. 4a schließt sich an einen im wesentlichen horizontalen oberen Abschnitt 19a ein unterer Abschnitt 19b mit im wesentlichen konstantem Querschnitt bis zum unteren Ende an. Bei der Variante der Fig. 4b verjüngt sich der untere Abschnitt 19b dagegen nach unten hin, jedoch mit einem etwas geringeren Öffnungswinkel als jenem der Wand des Beckens 11. Die Varianten der Fig. 4c und 4d sind beide gekennzeichnet durch eine Leiteinrichtung 19 mit einem sich nach unten hin verjüngenden oberen Abschnitt 19a. Im Fall der Fig. 4c schließt sich daran ein unterer Abschnitt 19b mit im wesentlichen konstantem Querschnitt an, während in Fig. 4d eine Ausführungsform mit sich ebenfalls verjüngendem unteren Abschnitt 19b dargestellt ist. In letzterem Fall hat der obere Abschnitt 19a der Leiteinrichtung 19 im Becken 11 einen größeren Öffnungswinkel als dessen Wandung, während der untere Abschnitt 19b einen geringeren Öffnungswinkel als das Becken 11 selbst aufweist. Die Ausführungsform der Fig. 4e ist schließlich mit einer Leiteinrichtung 19 ausgestattet, die sich stetig von seinem oberen bis hin zu seinem unteren Ende konisch verjüngt und der keinen Übergang zwischen einen oberen und unteren Abschnitt besitzt. Der Öffnungswinkel der trichterförmigen Leiteinrichtung 19 aus Fig. 4e ist größer als jener der Wandung des Beckens 11.

## Patentansprüche

1. Sedimentationsbecken, speziell für Kreislaufsysteme, in welchem partikelförmige Verunreinigungen der Kreislaufflüssigkeit abgeschieden werden und aus dem die gereinigte Flüssigkeit wieder abgezogen wird, bestehend aus einem sich nach unten konisch verjüngenden Becken und einer im Inneren des Beckens angeordneten, oberhalb des Beckenbodens endenden Leiteinrichtung, dadurch gekennzeichnet, daß das Becken (11) nach oben offen ist.

2. Becken nach Anspruch 1, dadurch gekennzeichnet, daß die Leiteinrichtung (19) trichterförmig ist.

3. Becken nach Anspruch 2, dadurch gekennzeichnet, daß die Leiteinrichtung (19) aus einem oberen, sich nach unten konisch verjüngenden Abschnitt (19a) und allenfalls aus einem sich daran anschließenden unteren Abschnitt (19b) mit im wesentlichen konstanten Querschnitt bzw. geringerem Öffnungswinkel als jenem des oberen Abschnittes (19a) besteht, wobei der Öffnungswinkel des oberen Abschnittes (19a) der Leiteinrichtung (19) größer ist als jener des Beckens (11).

4. Becken nach Anspruch 2, dadurch gekennzeichnet, daß die Leiteinrichtung (19) aus einem im wesentlichen horizontalen oberen Abschnitt (19a) und allenfalls aus einem sich daran anschließenden unteren Abschnitt (19b) mit im wesentlichen konstanten Querschnitt bzw. geringerem Öffnungswinkel als jenem des oberen Abschnittes (19a) besteht.

5. Becken nach einem der vorhergehenden Ansprüche, dadurch gekennzeichnet, daß alle Einbringöffnungen (20, 21) für die Flüssigkeit aus dem Kreislauf oberhalb und/oder innerhalb des Bereiches der Leiteinrichtung (19) vorgesehen sind.

6. Becken nach einem der Ansprüche 2 bis 5, dadurch gekennzeichnet, daß zumindest eine Einbringöffnung (21) in den oberen Abschnitt (19a) der Leiteinrichtung (19) über ein Rohrstück (22) mit dem außerhalb des Beckens (11) befindlichen Kreislaufsystem verbunden ist.

7. Becken nach Anspruch 5 oder 6, dadurch gekennzeichnet, daß zumindest eine die Höhe der Flüssigkeitsoberfläche definierende Einbringöffnung (21) in den oberen Abschnitt (19a) der Leiteinrichtung (19) unterhalb des Niveaus der Überlauföffnung (23) mündet und die unterste Abzugsöffnung (27) für die Flüssigkeit oberhalb des unteren Endes des unteren Abschnittes (19b) der Leiteinrichtung (19) liegt.

8. Becken nach einem der vorhergehenden Ansprüche, dadurch gekennzeichnet, daß zumindest eine Abzugsleitung (25) für die Flüssigkeit aus dem Becken (11) im Raum zwischen der Wand des Beckens (11) und der Leiteinrichtung (19) vorzugsweise in Höhe deren unteren Abschnittes (19b), in das Becken (11) mündet.

9. Becken nach Anspruch 8, dadurch gekennzeichnet, daß die Achse der oder jeder Abzugsöffnung (27) aus dem Becken im wesentlichen tangential zur Wand des Beckens (11) orientiert ist, wobei vorzugsweise die Ebene der Abzugsöffnung (27) im wesentlichen senkrecht und radial zur vertikalen Achse (A) des Beckens orientiert und jede Abzugsöffnung (27) im selben Umlaufsinn wie die oder jede Einleitung (29) mündet.

10. Becken nach Anspruch 8 oder 9, dadurch gekennzeichnet, daß die oder jede Abzugsleitung (25) einen in das Becken (11) hineinragenden Stutzen (26) mit einer Abzugsöffnung (27) aufweist.

11. Becken nach einem der vorhergehenden Ansprüche, dadurch gekennzeichnet, daß zumindest eine Flüssigkeitszuleitung (28) mit einem tangential zur Wand des Beckens (11) orientierten Abschnitt (29) vorgesehen ist.
